# EUROPEAN PATENT APPLICATION

(11) **EP 1 245 641 A1**
(43) Date of publication of application: **02.10.2002**
(21) Application number: 00987719.2
(22) Date of filing: 22.12.2000
(51) Int. Cl.: C08L 79/04, C08K 3/04

(54) **SLIDING MATERIAL**

(30) Priority: 24.12.1999 JP 36836699
(71) Applicant: CLARIANT INTERNATIONAL LTD., 4132 Muttenz (CH)
(72) Inventor: NIWA, Noriyuki, Clariant (Japan) K.K., Tokyo 113-8662 (JP); AIZAWA, Masami, Clariant (Japan) K.K., Tokyo 113-8662 (JP)
(74) Representative: Hütter, Klaus, Dr.
(86) International application number: JP0009155
(87) International publication number: WO01048088

(57) **Abstract**

The present invention relates to a resinous composition comprising a carbon powder and a polybenzimidazole resin powder, and a tribological material using the resinous composition. This tribological material can be produced by blending a carbon powder and a polybenzimidazole resin powder together to prepare a composition and molding the composition with heating under pressure. The present invention provides a tribological material which possesses excellent tribological properties under high temperature conditions and has a low coefficient of friction.

## Description

### [BACKGROUND OF THE INVENTION]

### Technical Field of the Invention

The present invention relates to a tribological material. More particularly, the present invention relates to a composition comprising a carbon powder and a polybenzimidazole resin. This composition according to the present invention is used in members that should have tribological properties, for example, washers, bearings, piston rings, and other members of which the temperature may be brought to high temperatures.

### Background Art

In general, metals or metals with a lubricating agent coated thereon have been used in tribological materials that can withstand high temperatures, which are above the service temperature range in which lubricating oils can be used, specifically a temperature of 300°C or above. Metals, however, suffer from problems including large weight and damage to counter materials.

For this reason, the application of resins, which have smaller weight than metals and are relatively flexible, to tribological materials has been studied. Resin materials, which have been studied as such tribological materials, include, for example, ultrahigh molecular polyethylene, polycarbonate resin, polyphenylene sulfide resin, phenolic resin, fluororesin, aromatic polyamide and the like. The incorporation of lubricating agents, for example, molybdenum compounds, into these resins has also been studied.

These conventional resins, however, involve a problem of strength, heat resistance, or abrasion resistance. Further, regarding the heat resistance, the temperature of only the sliding face of the resin material is partially brought to high temperatures. This often causes troubles such as deformation.

It is an object of the present invention to provide a tribological material which can solve the problems of the conventional tribological materials and has an excellent coefficient of friction and possesses excellent tribological properties under high temperature conditions of 300°C or above.

### [SUMMARY OF THE INVENTION]

According to the present invention, there is provided a resinous composition characterized by comprising a carbon powder and a polybenzimidazole resin powder.

Further, according to the present invention, there is provided a method for producing a tribological material, characterized by comprising the steps of: blending a carbon powder and a polybenzimidazole resin powder together to form a composition; and molding the composition with heating under pressure into a tribological material.

Furthermore, according to the present invention, there is provided a tribological material which possesses excellent tribological properties under high temperature conditions and has a low coefficient of friction.

### [DETAILED DESCRIPTION OF THE INVENTION]

### <Polybenzimidazole>

The composition according to the present invention comprises polybenzimidazole. Here polybenzimidazole refers to a polymer comprising substituted or unsubstituted benzimidazole as monomer units. When the benzimidazole has a substituent, the substituent may be any one so far as the substituent does not sacrifice the effect of the present invention.

Preferred polybenzimidazoles are represented by the following general formula (I): 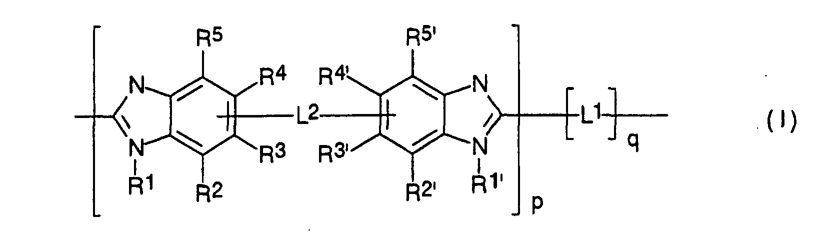 wherein
R¹ to R⁵ and R^{1'} to R^{5'} each independently are a substituent;
L¹ is a divalent linking group;
L² is a divalent linking group which bonds any one of R¹ to R⁵ to any one of R^{1'} to R^{5'}; and
p and q each are a number which indicates the degree of polymerization.

Here R¹ to R⁵ and R^{1'} to R^{5'} each independently are preferably hydrogen, an alkyl group having 1 to 10 carbon atoms, an aryl group having 6 to 10 carbon atoms, a halogen, a hydroxyl group, or an alkoxyl group having 1 to 10 carbon atoms.

L¹ and L² each independently are preferably a single bond or a divalent linking group comprised of a chalcogen atom, an aromatic compound, an aliphatic compound, an alicyclic compound, or a heterocyclic compound.

When L¹ or L² is a linking group comprised of an aliphatic compound, an alkylene having 1 to 8 carbon atoms is preferred; when L¹ or L² is a linking group comprised of an aromatic compound, phenylene or naphthylene is preferred; when L¹ or L² is a linking group comprised of a heterocyclic compound, pyridinylene, pyrazinylene, furanylene, quinolinylene, thiophenylene, pyranylene, indenylene, or furylenylene is preferred; and when L¹ or L² is a linking group comprised of chalcogen, -O-, -S-, or -SO₂- is preferred.

Specific examples of preferred polybenzimidazoles include:
poly-2,2'-(m-phenylene)-5,5'-dibenzimidazole;
poly-2,2'-(diphenylene-2'',2''')-5,5'-dibenzimidazole;
poly-2,2'-(diphenylene-4'',4''')-5,5'-dibenzimidazole;
poly-2,2'-(1'',1'',3''-trimethylindanylene)-3'',5''-p-phenylene-5,5'-dibenzimidazole;
2,2'-(m-phenylene)-5,5'-dibenzimidazole/2,2'-(1'',1'',3''-trimethylindanylene)-3'',15''-p-phenylene-5,5'-dibenzimidazole copolymer;
2,2'-(m-phenylene)-5,5'-dibenzimidazole/2,2'-(diphenylene-2'',2''')-5,5'-dibenzimidazole copolymer;
poly-2,2'-(furylene-2''15'')-5,5'-dibenzimidazole;
poly-2,2'-(naphthalene-1'',6'')-5,5'-dibenzimidazole;
poly-2,2'-(naphthalene-2'',6'')-5,5'-dibenzimidazole;
poly-2,2'-amylene-5,5'-dibenzimidazole;
poly-2,2'-octamethylene-5,5'-dibenzimidazole;
poly-2,2'-cyclohexenyl-5,5'-dibenzimidazole;
poly-2,2'-(m-phenylene)-5,5'-di(benzimidazole)-ether;
poly-2,2'-(m-phenylene)-5,5'-di(benzimidazole)-sulfide;
poly-2,2'-(m-phenylene)-5,5'-di(benzimidazole)-sulfone;
poly-2,2'-(m-phenylene)-5,5'-di(benzimidazole)-methane;
poly-2,2'-(m-phenylene)-5,5'-di(benzimidazole)-propane-2,2;
poly-ethylene-1,2,2,2''-(m-phenylene)-5,5'-di-(benzimidazole)ethylene-1,2; and
the like.

Among them, poly-2,2'-(m-phenylene)-5,5'-dibenzimidazoles represented by the following formula (II) are more preferably used in the composition of the present invention: 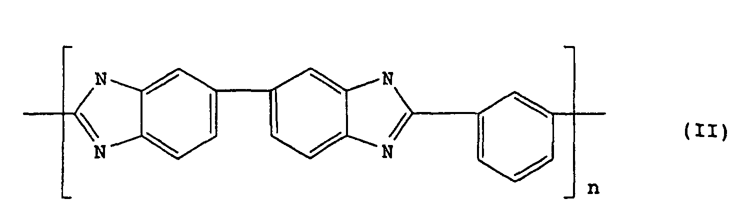 wherein n is a number indicating the degree of polymerization.

Any polybenzimidazole may be selected from these compounds so far as the effect of the present invention is not sacrificed. Further, if necessary, two or more benzimidazoles may be used in combination.

These polybenzimidazoles have a wide range of intrinsic viscosity according to the structure and the molecular weight. Preferably, the intrinsic viscosity is not less than 0.2. Further, the thermal properties also depend upon the structure. Since heat resistance is required, the polybenzimidazole should have a higher heat distortion temperature than temperatures to which the tribological material may be exposed. In general, the heat distortion temperature is preferably 180°C or above, more preferably 300°C or above. The above poly-2,2'-(m-phenylene)-5,5'-dibenzimidazoles generally have a heat distortion temperature of about 435°C and are particularly preferred compounds.

In the composition according to the present invention, these polybenzimidazoles are generally blended in a powder form. In this case, the particle diameter of the resin powder is not particularly limited. However, the particle diameter is preferably not more than 1 mm as measured by a laser scattering particle size distribution method.

### <Carbon powder>

The composition of the present invention comprises a carbon powder. Carbons are classified into diamond, graphite, and amorphous carbon. In the present invention, the carbon powder is preferably a graphite powder. Graphites are classified into naturally occurring type and artificial type. Further, shapes are classified into flakes, particles, masses, soil, shapeless and the like. In the present invention, any graphite may be selected from the above graphites.

In the composition according to the present invention, preferably, the carbon powder has a particle diameter of not more than 1 mm, more preferably not more than 500 µm, as measured by the laser light scattering particle size distribution method. The particle diameter of the carbon powder is preferably smaller than that of the polybenzimidazole resin powder. When the particle diameter of the carbon powder is larger than that of the polybenzimidazole resin powder, at the time of molding of the composition, uneven thermal conduction and, in its turn, uneven melting of the resin occur, sometimes leading to the formation of voids in the interior of the molded product of the composition. On the other hand, when the particle diameter of the carbon powder is excessively large, the carbon powder is likely to be separated from the resin in the surface portion. This sometimes deteriorates the abrasion properties, and, thus, the molded product is worn away in an early stage.

### <Polybenzimidazole resin composition>

The resin composition of the present invention comprises the above-described polybenzimidazole resin powder and carbon powder.

The content of the carbon powder is preferably 1 to 70% by weight, more preferably 5 to 50% by weight, based on the total weight of the resin composition. The content of the polybenzimidazole resin is preferably 30 to 99% by weight, more preferably 50 to 95% by weight.

The resin composition according to the present invention may contain other additional components so far as the effect of the present invention is not sacrificed. Additional components usable herein include (i) resins, for example, high-molecular polyethylene, polyphenylene sulfide and the like and (ii) polymeric compounds which are carbonized as a result of heat decomposition, for example, polycarbonate and the like.

### <Molding of tribological material>

The polybenzimidazole resin composition is molded into a tribological material. Molding may be carried out by any of method, and examples thereof include sintering molding, ultrasonic powder molding, cold pressure molding, melt molding, injection molding and the like. Preferably, molding is carried out by pressing under high temperature conditions. These conditions depend, for example, upon the type of the polybenzimidazole resin used. Molding is carried out at a temperature of preferably 350 to 600°C, more preferably 400 to 500°C, and a pressure of preferably 140 to 1,400 kg/cm², more preferably 500 to 1,000 kg/cm².

The molded product of the polybenzimidazole resin composition thus obtained has an excellent coefficient of friction and can be used as a tribological material possessing excellent tribological properties at a high temperature of 300°C or above. Specifically, the above composition according to the present invention can be used in members that should have tribological properties, for example, washers, bearings, piston rings, and other members of which the temperature may be brought to high temperatures.

### [EXAMPLES]

The following examples further illustrate the present invention, but are not intended to limit it.

### Example 1

A poly-2,2'-(m-phenylene)-5,5'-dibenzimidazole powder resin was allowed to stand in a forced air convection oven at 150°C for 12 hr to dry the resin for removing volatile components contained in the resin, followed by furnace cooling. Thereafter, 30% by weight, based on the total weight, of a carbon powder (particle diameter about 50 µm; manufactured by Chuetu Graphite Works Co., Ltd.) was added to and intimately mixed with the resin powder. This mixed powder was loaded into a mold which has been preheated to 200°C and was then compressed by means of a 650-ton hydraulic press at 470°C and 600 kg/cm² to prepare a molded sinter.

The sinter thus obtained was cut into a size of 5 x 30 x 30 and was subjected to a thrust wear test according to the method specified in JIS K 7218 A. Testing conditions were as follows.
Atmosphere temperature: 300°C
Load: 50 N
Contact area: 2 cm²
Testing time: 100 min (sliding distance 3 km)
Counter material: SUS 304

As a result, it was found that the sinter had a coefficient of dynamic friction of 0.15.

### Example 2

A sinter was prepared in the same manner as in Example 1, except that a carbon powder manufactured by The Kansai Coke and Chemicals Co., LTD. (particle diameter about 5 µm) was used instead of the carbon powder in Example 1. The sinter thus obtained was subjected to a thrust wear test in the same manner as in Example 1. This sinter had a coefficient of dynamic friction of 0.21.

### Example 3

A sinter was prepared in the same manner as in Example 1, except that a carbon powder manufactured by Hitachi Powdered Metals Co., Ltd. (particle diameter about 2 µm) was used instead of the carbon powder in Example 1. The sinter thus obtained was subjected to a thrust wear test in the same manner as in Example 1. This sinter had a coefficient of dynamic friction of 0.15.

### Comparative Example

A sinter was prepared in the same manner as in Example 1, except that the carbon powder was not incorporated. The sinter thus obtained was subjected to a thrust wear test in the same manner as in Example 1. This sinter had a coefficient of dynamic friction of 0.31.

## Claims

1. A resinous composition comprising a carbon powder and a polybenzimidazole resin powder.

2. A resinous composition according to claim 1, wherein the carbon powder consists of a graphite.

3. A resinous composition according to claim 1, wherein the content of the carbon powder is from 1 to 70% by weight based on the total amount of the resinous composition.

4. A resinous composition according to claim 1, wherein the polybenzimidazole resin is represented by the following general formula (I): 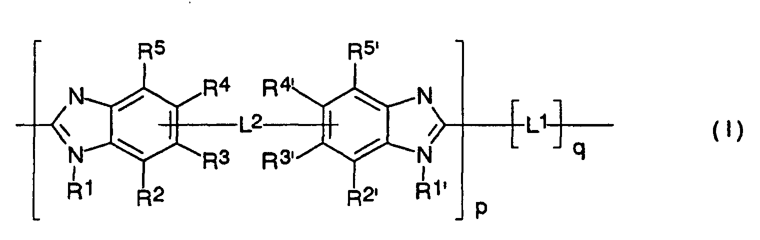 wherein
R¹ to R⁵ and R^{1'} to R^{5'} each independently are a substituent;
L¹ is a divalent linking group;
L² is a divalent linking group which bonds any one of R¹ to R⁵ to any one of R^{1'} to R^{5'}; and
p and q each are a number which indicates the degree of polymerization.

5. A resinous composition according to claim 4, wherein the polybenzimidazole resin is poly-2,2'-(m-phenylene)-5,5'-dibenzimidazole.

6. A method for producing a tribological material, comprising the steps of:
blending a carbon powder and a polybenzimidazole resin powder together to form a composition; and
molding the composition with heating under pressure into a tribological material.

7. A method for producing a tribological material according to claim 6, wherein the molding is carried out under conditions of temperature 350 to 600°C and pressure 140 to 1,400 kg/cm².

8. A molded tribological material comprising a carbon powder and a polybenzimidazole resin powder.
